# FASCICULE DE BREVET EUROPEEN

(11) **EP 0 493 259 B1**
(45) Date de publication et mention de la délivrance du brevet: **01.06.1994**
(21) Numéro de dépôt: 91403546.4
(22) Date de dépôt: 26.12.1991
(51) Int. Cl.: G21C 3/334, G21C 3/32, G21C 3/34

(54) **Procédé et dispositif de réparation d'une grille-entretoise d'un assemblage combustible pour réacteur nucléaire**
Verfahren und Vorrichtung zur Reparatur eines Abstandhalters in einem Kernreaktorbrennstabbündel
Method and apparatus for repairing a spacer grid in a nuclear reactor fuel assembly

(30) Priorité: 28.12.1990 FR 9016496
(43) Date de publication de la demande: 01.07.1992
(73) Titulaire: FRAMATOME, 92400 Courbevoie (FR); COGEMA, F-78141 Velizy Villacoublay (FR)
(72) Inventeur: Guironnet, Louis, F-69009 Lyon (FR); Brin, Michel, F-38300 Bourgoin Jallieu (FR)
(74) Mandataire: Bouget, Lucien

(56) Documents cités:
- EP-A- 0 082 075
- EP-A- 0 109 902
- EP-A- 0 146 896
- EP-A- 0 171 210
- FR-A- 2 618 014
- FR-A- 2 633 436

## Description

L'invention concerne un procédé et un dispositif de réparation d'une grille-entretoise d'un assemblage combustible pour réacteur nucléaire et en particulier d'un assemblage combustible pour réacteur nucléaire refroidi par de l'eau sous pression.

Les assemblages combustibles pour réacteur nucléaire refroidi par de l'eau sous pression comportent un faisceau de crayons combustibles parallèles et une ossature de maintien des crayons. L'ossature de maintien des crayons est constituée par une pluralité de grilles-entretoises espacées suivant la direction longitudinale du faisceau et définissant des cellules disposées suivant un réseau régulier. Les crayons du faisceau qui sont engagés dans les cellules des grilles-entretoises sont maintenus dans des directions transversales par des bossettes et des ressorts fixés sur les parois des cellules. L'ossature de l'assemblage comporte des tubes-guides qui se substituent à certains des crayons du faisceau et qui sont fixés de manière rigide sur les grilles-entretoises ainsi que deux embouts de fermeture fixés aux extrémités des tubes-guides dont la longueur est supérieure à la longueur des crayons.

De préférence, les embouts sont fixés de manière amovible à l'extrémité des tubes-guides, de manière à pouvoir être démontés, par exemple pour effectuer à distance et sous eau, le remplacement de certains crayons de l'assemblage qui sont devenus défectueux, après une utilisation d'une certaine durée de l'assemblage dans le coeur du réacteur nucléaire.

Au cours des opérations de déchargement et de rechargement du coeur du réacteur, les assemblages combustibles peuvent être détériorés par des chocs accidentels ou par la mise en oeuvre d'efforts excessifs sur leurs structures.

Les grilles-entretoises dont la périphérie constitue des parties saillantes de l'assemblage combustible sont les parties de l'assemblage qui sont le plus susceptible de subir des détériorations au cours des manutentions.

Les contrôles effectués sur les grilles-entretoises des assemblages ont révélé que les grilles-entretoises disposées aux extrémités de l'assemblage, c'est-à-dire au voisinage des embouts étaient les plus vulnérables lors des opérations de manutention.

Dans le cas d'une grille-entretoise détériorée accidentellement, il est possible par exemple, de regarnir une ossature neuve de remplacement avec les crayons usagés de l'assemblage.

Une telle opération peut être complexe, longue et coûteuse.

Il peut donc s'avérer extrêmement intéressant de réparer la grille détériorée plutôt que de garnir une ossature neuve avec les crayons usagés ou des crayons de remplacement présentant les caractéristiques des crayons de l'assemblage usagé, en ce qui concerne leur teneur en uranium.

Le FR-A-2 633 436 décrit un procédé de réparation d'une grille-entretoise d'un assemblage combustible pour réacteur nucléaire présentant une partie endommagée, de manière à pouvoir remettre l'assemblage combustible en service dans le coeur du réacteur après réparation.

Le but de l'invention est de proposer un procédé spécifique de réparation d'une grille-entretoise d'un assemblage combustible pour réacteur nucléaire comportant un faisceau de crayons parallèles et une ossature de maintien des crayons constituée par une pluralité de grilles-entretoises espacées suivant la direction longitudinale du faisceau définissant des cellules disposées suivant un réseau régulier dans lesquelles sont engagés les crayons, des tubes-guides fixés aux grilles-entretoises et se substituant à certains crayons du faisceau et deux embouts de fermeture fixés de manière amovible aux extrémités des tubes-guides dont la longueur est supérieure à la longueur des crayons, ce procédé permettant la remise en service de l'assemblage combustible, sans avoir à remplacer son ossature par une ossature neuve et à effectuer le regarnissage de l'ossature par des crayons combustibles.

Dans ce but, on superpose à la grille-entretoise dont on effectue la réparation, une grille partielle dont le réseau de cellules correspond à une partie endommagée du réseau de la grille-entretoise, par engagement, dans la direction longitudinale, des cellules de la grille partielle, sur l'une des extrémités des crayons situés dans la zone endommagée de la grille entretoise et par poussée sur la grille partielle pour la déplacer jusqu'à sa position superposée à la grille-entretoise, après démontage d'au moins un embout de l'assemblage combustible.

Afin de bien faire comprendre l'invention, on va maintenant décrire, à titre d'exemple non limitatif, en se référant aux figures jointes en annexe, un mode de réalisation du procédé suivant l'invention et le dispositif utilisé pour la mise en oeuvre de ce procédé.

La figure 1 est une vue en élévation d'un assemblage combustible d'un réacteur nucléaire à eau sous pression dont la grille-entretoise inférieure endommagée a été réparée par le procédé suivant l'invention.

La figure 2 est une vue de dessus d'une grille partielle de réparation d'une grille-entretoise d'un assemblage combustible, par le procédé suivant l'invention.

La figure 3 est une vue en élévation et en coupe partielle d'un dispositif de démontage de l'embout supérieur de l'assemblage combustible.

La figure 4 est une vue partielle en élévation et en coupe suivant 4-4 de la figure 5, d'un embout supérieur de remplacement de l'assemblage combustible.

La figure 5 est une vue de dessus de l'embout de remplacement, suivant 5-5 de la figure 4.

La figure 6 est une vue en coupe suivant 6-6 de la figure 5.

La figure 7 est une vue en coupe suivant 7-7 de la figure 8, d'un dispositif de mise en place de faux crayons dans une grille partielle de réparation de l'assemblage.

La figure 8 est une vue en coupe suivant 8-8 de la figure 7.

La figure 9 est une vue en perspective d'un outillage de pose de la grille partielle sur un assemblage combustible.

La figure 10 est une vue en élévation et en coupe partielle du dispositif de pose représenté sur la figure 9, à l'issue de l'opération de pose de la grille partielle sur un assemblage combustible.

La figure 11 est une vue en coupe longitudinale d'un bloc presseur constituant une partie du dispositif représenté sur les Fig. 7 et 8.

La figure 12 est une vue à plus grande échelle du détail 12 de la figure 10.

La figure 13 est une vue en perspective de la grille partielle de réparation superposée à la grille-entretoise de l'assemblage combustible.

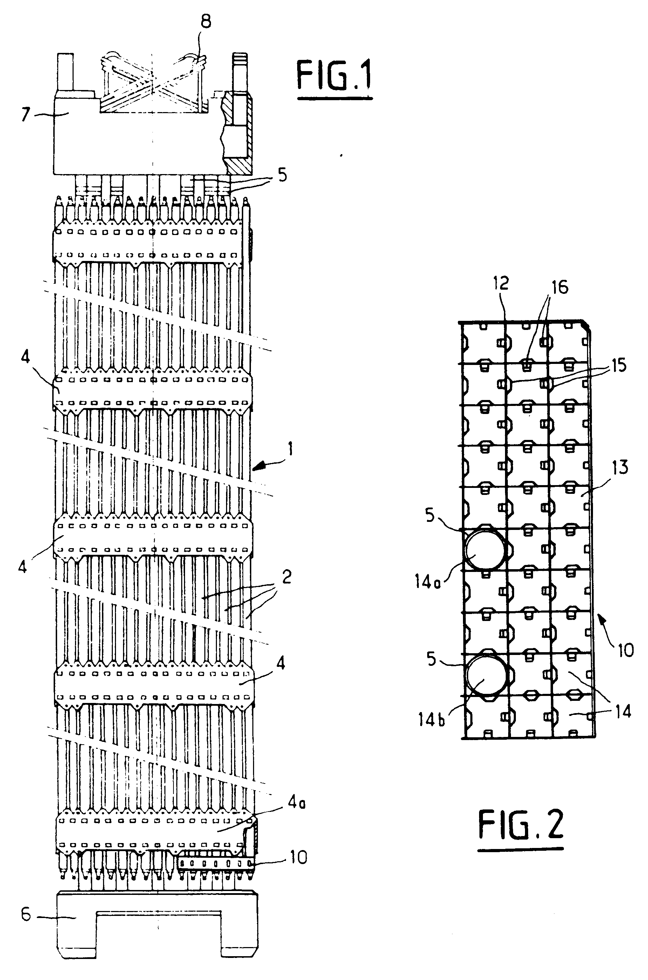

Sur la figure 1, on voit un assemblage combustible pour réacteur nucléaire à eau sous pression désigné de manière générale par le repère 1.

L'assemblage combustible 1 comporte un faisceau de crayons combustibles parallèles 2 disposé dans une ossature constituée par des grilles-entretoises 4 espacées suivant la direction longitudinale du faisceau, des tubes-guides 5 dont la longueur est supérieure à la longueur des crayons combustibles 2, ainsi qu'un embout inférieur 6 et un embout supérieur 7 fixés sur les extrémités des tubes-guides 5 et assurant la fermeture de l'assemblage combustible.

Les grilles-entretoises 4 comportent un cadre extérieur de forme sensiblement carrée à l'intérieur duquel sont délimitées des cellules recevant chacune un crayon combustible 2 et disposées suivant un réseau régulier.

Certaines positions de crayons combustibles dans le réseau des grilles-entretoises 4 sont occupées par des tubes-guides 5 qui sont fixés de manière rigide à chacune des entretoises 4.

L'embout inférieur 6 de l'assemblage comporte des pieds supports qui sont destinés à venir reposer sur la plaque inférieure de coeur du réacteur, lorsque l'assemblage combustible 1 est placé dans le coeur du réacteur.

L'embout supérieur 7 comporte des ressorts à lames 8 qui sont destinés à maintenir l'assemblage combustible en position dans le coeur, sous la plaque supérieure de coeur du réacteur.

Les embouts inférieur 6 et supérieur 7 de l'assemblage sont fixés de manière amovible à l'extrémité des tubes-guides 5, par l'intermédiaire de moyens d'assemblage fixés dans l'embout supérieur et engagés dans la partie supérieure des tubes-guides.

La grille-entretoise inférieure 4a de l'assemblage 1 présente une zone endommagée au voisinage de l'un de ses angles dont on a effectué la réparation en utilisant une grille partielle 10, la grille-entretoise 4a et la grille partielle de réparation 10 étant placées dans des positions superposées.

Sur la figure 2, on voit la grille partielle de réparation 10 de la grille-entretoise 4a qui est constituée par une partie d'une grille-entretoise semblable aux grilles-entretoises 4 de l'assemblage combustible 1.

Les grilles-entretoises 4 de l'assemblage comportent un cadre de forme carrée à l'intérieur duquel des plaquettes assemblées à angle droit délimitent des cellules de forme carrée.

Le réseau à mailles carrées de chacune des grilles-entretoises comporte dix-sept cellules suivant les deux côtés du carré.

Comme il est visible sur la figure 2, la grille partielle 10 de forme rectangulaire comporte trois cellules suivant l'un de ses bords 12 et dix cellules suivant son second bord 13.

Les cellules 14 de la grille partielle 10 sont délimitées par des parois comportant des bossettes 15 et des ressorts 16 de retenue des crayons. Les bossettes 15 et les ressorts 16 peuvent être obtenus par découpage et déformation des parois de la grille ou rapportés sur ces parois.

Deux des cellules 14a et 14b de la grille partielle 10 ne comportent pas de ressort et de bossette et sont destinées à recevoir des tubes-guides 5 de l'assemblage.

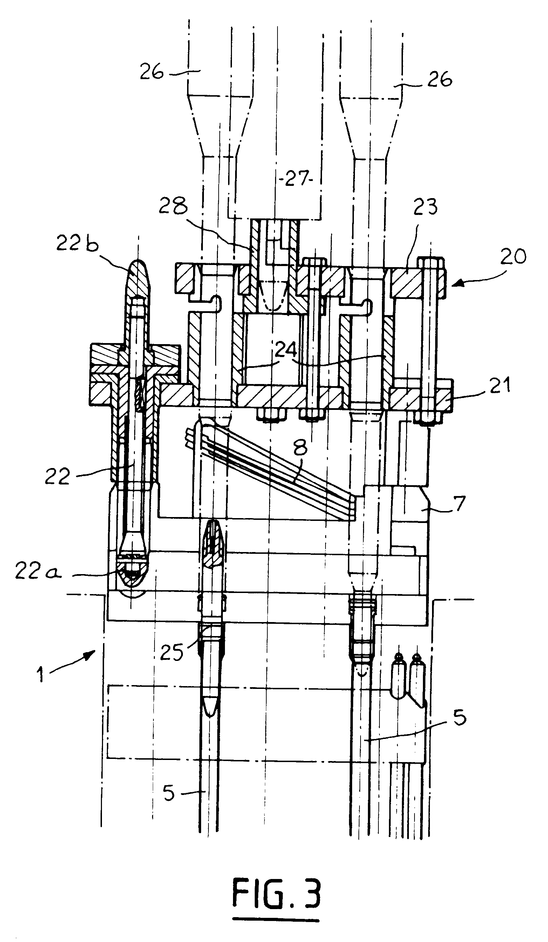

Sur la figure 3, on a représenté la partie supérieure d'un assemblage combustible 1 comportant un embout supérieur démontable 7, sur lequel est monté en position de service un outillage de démontage de l'embout 7 désigné de manière générale par le repère 20.

L'outillage de démontage de l'embout supérieur 7 qui est connu de l'état de la technique comporte une platine 21 sur laquelle sont fixées des broches de bridage telles que 22 destinées à venir s'engager dans des trous de préhension de l'embout 7, par l'intermédiaire de leur partie inférieure 22a dont l'expansion radiale peut être commandée par un outil engagé sur la tête 22b de la broche.

L'outillage 20 comporte deux broches de bridage destinées à venir s'engager dans des trous de préhension de l'embout 7 disposées suivant une diagonale de l'embout.

L'outillage 20 comporte un support supérieur 23 fixé sur la platine 21 par l'intermédiaire de vis et d'écrous. La platine 21 porte des manchons 24 disposés à l'aplomb des positions des tubes-guides 5 de l'assemblage dont la partie supérieure est engagée dans la plaque adaptatrice de l'embout 7 et fixée sur cette plaque adaptatrice par l'intermédiaire de moyens de liaison démontables 25. Le support 23 est percé dans le prolongement des douilles 24 de manière à permettre à des outils 26 fixés à l'extrémité de perches de manutention, d'accèder aux moyens de liaison 25 pour effectuer leur démontage.

La manutention de l'outillage 20 et sa mise en place sur l'embout 7 de l'assemblage sont réalisées grâce à un outil de préhension 27 fixé à la partie inférieure d'une perche et venant s'engager dans une douille de préhension 28 fixée sur le support 23.

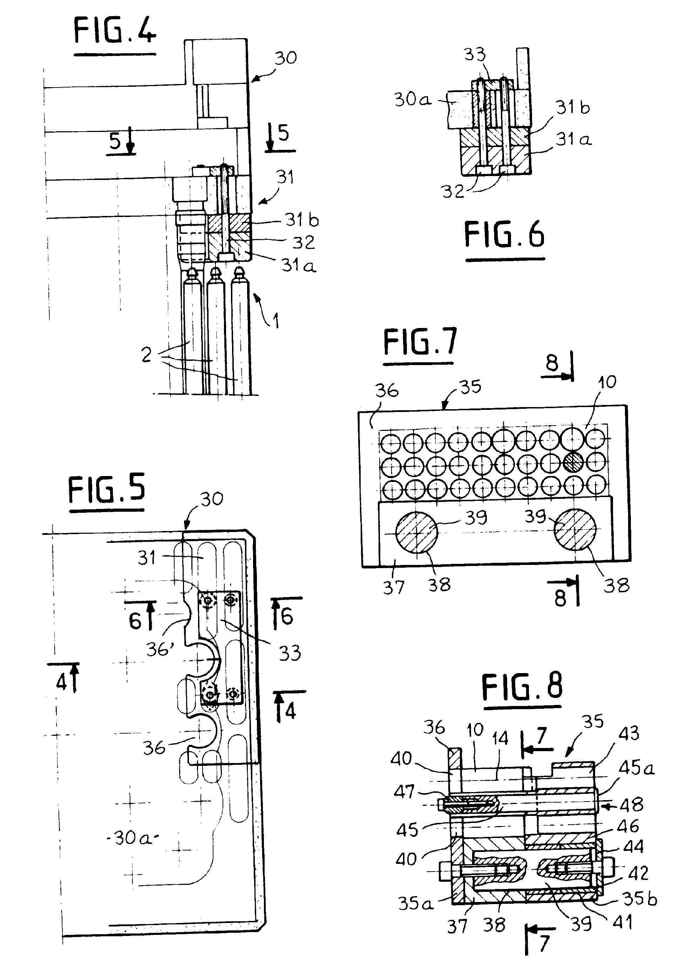

Sur les figures 4, 5 et 6, on a représenté un embout supérieur de substitution 30 qui doit être mis en place sur la partie supérieure de l'assemblage combustible après démontage de l'embout supérieur 7.

L'embout de substitution 30 peut être fixé sur la partie supérieure de l'assemblage combustible, de la même façon que l'embout 7, par l'intermédiaire de la partie d'extrémité supérieure des tubes-guides 5.

L'embout de substitution 30 comporte une cale 31 qui est mise en place sur la face inférieure de sa plaque adaptatrice 30a pour permettre le calage des extrémités supérieures des crayons combustibles 2 de l'assemblage engagées dans une partie détériorée de l'une au moins des grilles-entretoises de l'assemblage dont on effectue la réparation.

La cale 31 comporte plusieurs parties superposées telles que 31a et 31b, une partie 31a constituant un support d'appui des crayons 2 et au moins une partie 31b une plaque d'appui et de réglage de la hauteur totale de la cale.

La cale 31 est fixée sous la plaque adaptatrice 30a, par des vis 32 traversant les parties 31a et 31b de la cale, engagées à travers la plaque adaptatrice 30a et vissées dans une plaque de fixation 33 venant en appui contre la face supérieure de la plaque adaptatrice 30a.

Comme il est visible sur la figure 5, la cale 31 comporte des ouvertures 36 et des échancrures 36′ permettant le passage des tubes-guides 5 de l'assemblage dont la partie supérieure est fixée dans la plaque adaptatrice 30a de l'embout 30.

L'embout de substitution 30 fixé sur la partie supérieure de l'assemblage 1 en remplacement de l'embout supérieur 7 permet d'assurer, par l'intermédiaire de la cale 31, le maintien des crayons 2 engagés dans la zone détériorée de la grille à réparer, de manière que ces crayons ne soient plus susceptibles de se déplacer dans la direction longitudinale de l'assemblage, lors de l'introduction de la grille partielle.

Sur les figures 7 et 8, on a représenté un dispositif 35 d'introduction des faux crayons dans la grille partielle comportant deux parties 35a et 35b qui peuvent être rapportées l'une sur l'autre et assemblées.

La grille partielle 10 peut être emprisonnée entre la partie 35b appelée bloc presseur et la partie 35a.

La partie 35a du dispositif comporte une plaque d'appui 36 et un bloc d'assemblage 37 percé de deux trous 38 dans lesquels on peut venir engager et fixer deux colonnes d'assemblages 39 par l'intermédiaire de vis, les colonnes 39 ayant une longueur supérieure à la longueur des ouvertures 38 et restant saillantes par rapport au bloc d'assemblage 37.

La plaque 36 de la partie 35a du dispositif d'introduction des faux crayons est percée d'un réseau d'ouvertures circulaires 40 dont la disposition et les dimensions des sections correspondent à celles des crayons combustibles et des tubes-guides dans l'assemblage combustible.

Le réseau d'ouvertures 40 est délimité par un contour rectangulaire suivant le petit côté duquel sont disposées trois ouvertures 40 et suivant le grand côté duquel sont disposées dix ouvertures 40.

Les dimensions de ce contour correspondent aux dimensions de la grille partielle 10 qui peut être disposée contre la plaque 36, dans une position adjacente par rapport au bloc d'assemblage 37.

Le bloc presseur 35b comporte deux ouvertures 41 qui sont chemisées pour constituer des paliers de glissement 42.

Le bloc presseur 35b comporte également un réseau d'ouvertures traversantes 43 alignées par rapport au réseau des ouvertures 40 traversant la plaque 36.

La partie 35a et le bloc presseur 35b sont engagés l'un sur l'autre, après qu'on ait intercalé la grille partielle 10 entre ces deux parties 35a et 35b, dans leur zone comportant les réseaux d'ouvertures 40 et 43 respectivement.

L'extrémité saillante des colonnes 39 est engagée dans l'alésage des paliers 42 du bloc presseur 35b et fixée sur le bloc presseur 35b par des vis venant en appui sur des rondelles 44.

On utilise alors un ensemble de tronçons de tiges cylindriques 45 appelés faux crayons dont le diamètre est identique au diamètre extérieur des crayons combustibles 2 de l'assemblage, pour équiper la grille partielle 10 intercalée et fixée entre les deux parties 35a et 35b du bloc presseur.

Les tronçons cylindriques 45 ou faux crayons sont introduits successivement dans les cellules 14 de la grille partielle 10 destinée à recevoir des crayons combustibles, par engagement de chacun des faux crayons 45 dans une ouverture 43 du bloc presseur 35b et poussée sur le faux crayon dans le sens de la flèche 48.

Avant son introduction dans l'ouverture 43 et dans la cellule correspondante de la grille, le faux crayon 45 est muni à son extrémité d'une ogive amovible 47 fixée par l'intermédiaire d'une vis. L'ogive 47 permet d'écarter les ressorts de la cellule 14 pour permettre le passage du faux crayon 45.

Lorsque le faux crayon 45 est en place dans la grille partielle 10, à l'intérieur du dispositif 35, l'ogive 47 est démontée et placée sur un nouveau faux crayon 45 qui est introduit à son tour dans une ouverture 43 et dans une cellule 14 de la grille partielle 10.

Lorsque l'ensemble des cellules 14 de la grille partielle est équipé de faux crayons, on sépare la partie 35a du bloc presseur 35b équipé des faux crayons, en démontant les vis d'assemblage des colonnes 39, de sorte que la grille 10 reste fixée sur les extrémités des faux crayons 45 situées à l'extérieur des ouvertures 43 du bloc presseur 35b.

Les faux crayons 45 comportent une partie élargie 45a permettant leur mise en butée à l'entrée des ouvertures 43.

La grille partielle 10 équipée des faux crayons 45 et maintenue sur le bloc presseur 35b peut être mise en place pour effectuer la réparation d'une grille-entretoise de l'assemblage combustible.

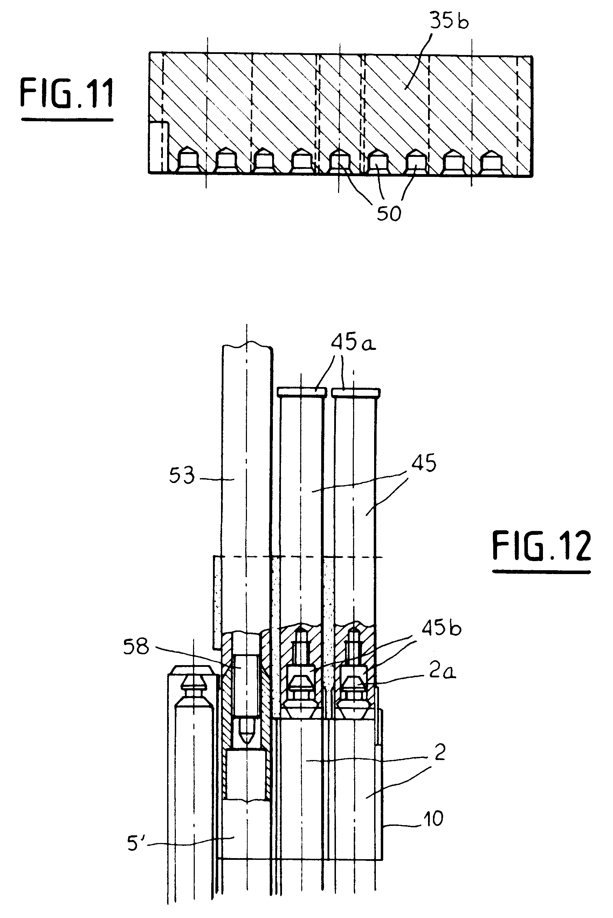

Sur la figure 11, on a représenté une section longitudinale du bloc presseur 35b, par un plan parallèle à l'axe des ouvertures 43, disposé entre deux rangées d'ouvertures.

Le bloc presseur 35b comporte des ouvertures 50 disposées suivant une rangée située entre deux rangées de faux crayons, ces ouvertures 50 étant destinées à recevoir des ailettes de mélange de l'eau de refroidissement autour des crayons combustibles découpées dans la partie d'extrémité des plaquettes délimitant les cellules 14 de la grille partielle 10.

Lors de la mise en place de la grille 10 en position intercalée entre les parties 35a et 35b du dispositif d'introduction des faux crayons, les ailettes de la grille partielle viennent se loger dans les ouvertures 50.

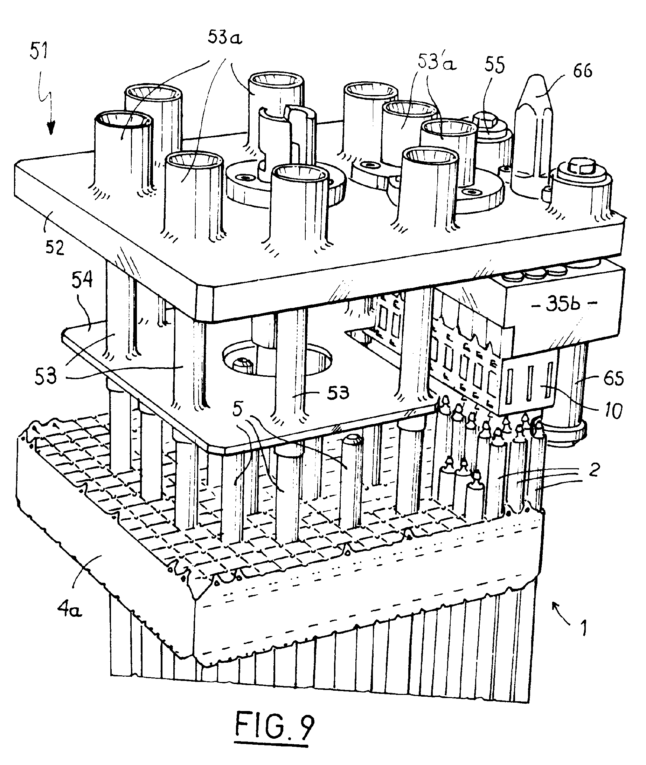

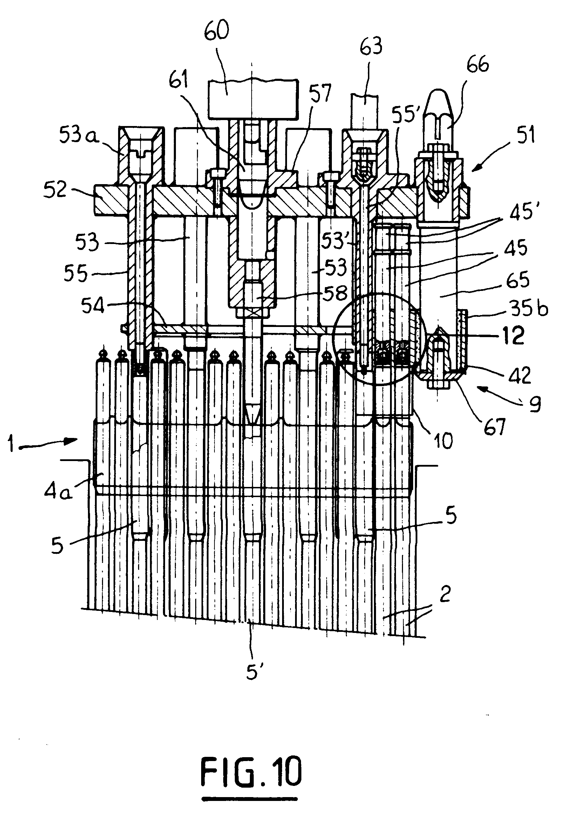

Sur les figures 9 et 10, on a représenté un outillage permettant la pose d'une grille partielle de réparation sur une grille-entretoise comportant une partie endommagée.

L'outillage de pose désigné de manière générale par le repère 51 a été mis en place sur la partie inférieure de l'assemblage combustible en position retournée, après démontage de l'embout inférieur de cet assemblage.

L'outillage 51 comporte une plaque support 52 sur laquelle sont fixés par soudage, un ensemble de fourreaux 53 et 53′ traversant la plaque support 52 dans une direction perpendiculaire à cette plaque support et placés dans des positions correspondant aux positions des tubes-guides 5 de l'assemblage combustible 1.

Les fourreaux 53 et 53′ comportent une partie supérieure 53a ou 53a′ dont le diamètre est supérieur à la partie courante du fourreau. Une plaque de maintien 54 est fixée à l'extrémité inférieure des fourreaux 53 et permet d'assurer le maintien dans des positions précises des extrémités inférieures des fourreaux 53 qui sont engagées sur les parties supérieures des tubes-guides 5 de l'assemblage. Les deux fourreaux 53′ qui ne sont pas fixés à la plaque 54 sont destinés à être engagés dans les cellules 14a et 14b de la grille de réparation 10, lors de la mise en place de cette grille et du bloc presseur 35b sur l'outillage 51, comme il sera expliqué plus loin.

A l'intérieur de chacun des fourreaux 53 et 53′, est disposée une vis d'assemblage 55 ou 55′ dont la tête vient reposer dans la partie élargie 53a ou 53a′ du fourreau, au-dessus de la plaque support 52, lorsque la vis 55 ou 55′ est engagée dans la partie supérieure d'un tube-guide 5 pour assurer la fixation du dispositif 51 sur l'assemblage combustible 1.

A la partie centrale de la plaque support 52, dans l'alignement du tube-guide d'instrumentation 5′ de l'assemblage combustible, un fourreau de préhension 57 est fixé au-dessus de la plaque 52 et une broche de centrage 58, en-dessous de la plaque 52.

La mise en place du dispositif 51 sur la partie inférieure de l'assemblage combustible 1 peut être réalisée grâce à un outil de manutention et de levage 60 comportant une broche 61 munie de doigts de préhension qui est engagée dans la douille 57.

Au moment de la mise en place de l'outillage 51, la broche 58 est engagée dans le tube-guide d'instrumentation 5′ et assure le centrage de l'outillage. La plaque 52 de l'outillage 51 est orientée grâce à l'outil de levage et de manutention 60, de manière que les extrémités inférieures des fourreaux 53 et 53′ viennent s'engager sur les tubes-guides 5.

La fixation de l'outillage 51 sur la partie inférieure de l'assemblage est complété par engagement et vissage des vis 55 ou 55′ dans la partie supérieure des tubes-guides 5, en utilisant un outil 63 fixé à l'extrémité d'une perche qui est introduit dans les alésages des parties 53a des douilles 53 pour réaliser successivement le vissage de chacune des vis 55 ou 55′ disposées dans les douilles 53 ou 53′.

La plaque support 52 comporte une partie latérale venant se placer à l'extérieur de l'assemblage combustible, lors de la mise en place de l'outillage 51.

Sur cette partie latérale du support 52 sont fixées deux colonnes de guidage 65 dont l'entraxe et le diamètre extérieur correspondent respectivement à l'entraxe et à l'alésage des paliers 42 du bloc presseur 35b.

Entre les colonnes 65 et dans une position équidistante par rapport à ces colonnes, une vis de déplacement 66 parallèle aux colonnes 65 est montée rotative sur la plaque support 52. La vis 66 comporte une tête ayant une extrémité tronconique et une partie profilée disposée au-dessus de la plaque support 52, de manière qu'un outil de vissage fixé à l'extrémité d'une perche puisse être engagé sur la tête de la vis 66 pour la mettre en rotation dans un sens ou dans l'autre.

Avant la mise en place de l'outillage 51 sur la partie d'extrémité de l'assemblage combustible, le bloc presseur 35b dans lequel sont engagés les faux crayons 45 et qui assure le support de la grille partielle 10 par l'intermédiaire de ces faux crayons 45, est mis en place sous la plaque support 52 de l'outillage 51. Les paliers 42 du bloc presseur 35b sont engagés chacun sur une colonne de guidage 65 et la vis d'entraînement 66 est mise en prise avec un alésage taraudé traversant le bloc presseur 35b entre les colonnes 65 et dans une position équidistante par rapport à ces colonnes. Les fourreaux 53′ sont engagés dans les cellules 14a et 14b de la grille 10. Le vissage de la vis d'entraînement 66 dans l'alésage taraudé du bloc presseur 35b est réalisé de manière que le bloc presseur 35b se trouve placé dans une position haute, en butée en-dessous de la plaque support 52, comme représenté sur la figure 9.

Des butées d'arrêt 67 sont fixées à la partie inférieure des colonnes 65 par des vis.

Dans la position haute du bloc presseur, les faux crayons 45 qui viennent reposer sur le bloc presseur par l'intermédiaire de leur partie supérieure à grand diamètre 45a sont dans la position 45′ représentée sur la figure 10.

La grille partielle 10 engagée sur les faux crayons 45 est elle-même dans une position haute.

Après la mise en place de l'outillage 51 sur la partie d'extrémité de l'assemblage 1, la vis 66 est mise en rotation par l'outil de vissage, de manière à déplacer le bloc presseur 35b, les faux crayons 45 et la grille partielle 10, dans la direction verticale et vers le bas.

Au cours de leur déplacement vers le bas, les crayons 45 passent de leur position 45′ représentée en pointillés sur la figure 10 à leur position 45 représentée en traits pleins.

Comme il est visible en particulier sur la figure 12, les faux crayons 45 comportent à leur partie inférieure un logement 45b dans lequel vient s'engager le bouchon 2a du crayon correspondant, lorsque les faux crayons 45 sont dans leur position basse. Les faux crayons 45 sont alors parfaitement centrés par rapport aux crayons 2 de l'assemblage, de sorte qu'ils sont dans une position parfaitement coaxiale et que leur surface externe se trouve dans le prolongement exact de la surface externe des crayons 2. Les faux crayons 45 et les crayons 2 constituent alors une surface de guidage parfaitement continue sur laquelle se déplacent les bossettes et les ressorts de la grille partielle 10, pendant le mouvement de descente de la partie 35b du bloc presseur, les faux crayons 45 se trouvant en butée sur les extrémités supérieures des crayons 2. L'extrémité inférieure des crayons 2 est elle-même en butée sur la cale 31 de l'embout supérieur de substitution.

Le déplacement du bloc presseur 35b par la vis 66 jusqu'à sa position basse représentée sur la figure 10 dans laquelle le bloc presseur 35b est venu en contact avec les butées 67 des colonnes 65, permet de placer la grille partielle 10 dans une position superposée par rapport à la grille inférieure 4a de l'assemblage combustible dont on effectue la réparation.

Comme il est visible sur la figure 9, les crayons 2 de l'assemblage combustible sur lesquels est engagée la grille partielle de réparation 10 sont dans une position relevée par rapport aux autres crayons de l'assemblage combustible, du fait de la présence de la cale 31.

La grille partielle de réparation 10 est alors totalement séparée du bloc presseur auquel elle n'était reliée que par l'intermédiaire des faux crayons 45.

On réalise alors le retrait du bloc presseur en le déplaçant vers le haut par l'intermédiaire de la vis 66. Au cours de ce déplacement vers le haut, le bloc presseur assure la remontée des faux crayons 45 dans leur position 45′ et le dégagement des parties supérieures des crayons 2 sur lesquels la grille partielle de réparation a été engagée. Il est alors possible de démonter l'outillage 51 et de remettre en place les embouts de l'assemblage.

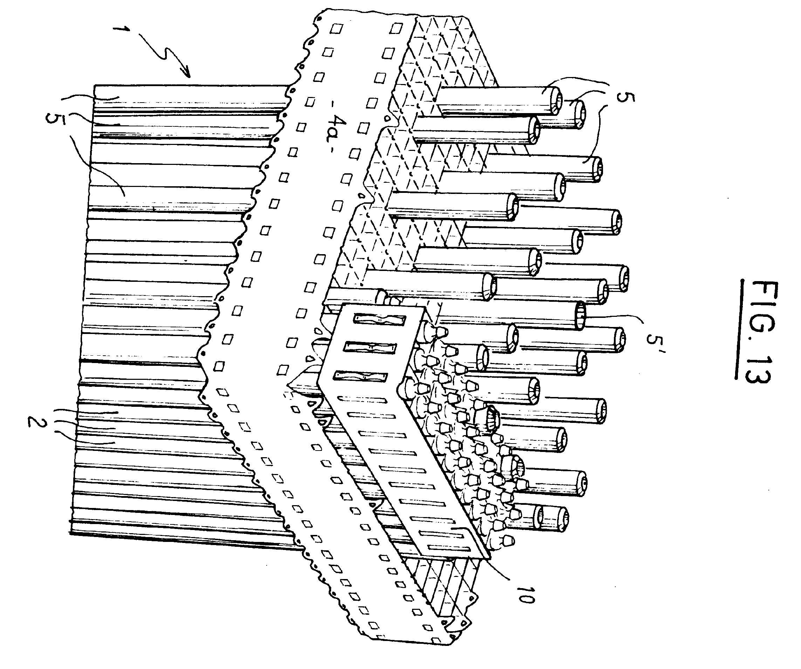

Sur la figure 13, on a représenté la partie inférieure de l'assemblage combustible à l'issue de l'opération de pose de la grille partielle de réparation 10 et après démontage de l'outillage de pose 51. La grille partielle de réparation 10 est superposée à la grille inférieure 4a de l'assemblage combustible et assure un maintien efficace des crayons combustibles 2 dans la zone détériorée de la grille 4a.

On va maintenant décrire, en se référant à l'ensemble des figures, une opération de réparation de la grille inférieure 4a d'un assemblage combustible.

L'assemblage combustible 1 est placé en position verticale et repose, par l'intermédiaire de son embout inférieur 6, sur une structure de support disposée dans le fond d'une piscine de stockage du combustible.

La partie supérieure de l'assemblage se trouve sous une hauteur d'eau qui est généralement de l'ordre de 10m.

Les opérations de réparation de la grille inférieure 4a de l'assemblage qui a été détériorée sont effectuées depuis le niveau supérieur de la piscine de stockage, par des opérateurs utilisant un moyen de levage et de manutention des assemblages combustibles et des perches à l'extrémité desquelles sont fixés des outils de forme appropriée aux différentes opérations à réaliser.

Dans un premier temps, le démontage de l'embout supérieur 7 de l'assemblage est réalisé en utilisant un outillage tel que l'outillage 20 représenté sur la figure 3 qui est mis en place grâce au moyen de manutention et de levage et qui est actionné par l'intermédiaire de perches.

Après démontage de l'embout supérieur, les crayons 2 de l'assemblage engagés dans la partie de la grille-entretoise à réparer sont mis en appui sur l'embout inférieur 6, par poussée sur leur extrémité supérieure.

Un embout de substitution tel que l'embout 30 représenté sur les figures 4 à 6 est mis en place sur la partie supérieure de l'assemblage, en remplacement de l'embout 7. L'embout 30 comporte une cale 31 venant en appui sur la partie supérieure des crayons 2, dans la zone à réparer.

L'assemblage combustible 1 est retourné à l'intérieur de la piscine de stockage, de manière que son embout inférieur 6 vienne en position supérieure et puisse être démonté.

On effectue, comme indiqué plus haut, la mise en place d'une grille de réparation de forme et de dimensions adaptées à la réparation à effectuer, dans un dispositif d'introduction de faux crayons en deux parties tel que représenté sur les figures 7 et 8.

On engage dans la grille et dans le bloc presseur, un ensemble de faux crayons 45.

Les deux parties 35a et 35b du dispositif d'introduction sont séparées et le bloc presseur 35b dans lequel sont engagés les faux crayons 45 assurant le maintien de la grille de réparation 10 est mis en place sous la plaque support 52 d'un outillage 51 tel que représenté sur les figures 9 et 10.

L'outillage 51 est mis en place sur la partie inférieure de l'assemblage combustible, de manière à réaliser la pose de la grille partielle 10, comme il a été décrit plus haut.

On effectue alors le remontage de l'embout inférieur initial puis on retourne l'assemblage combustible, de manière que l'embout supérieur de substitution se trouve à sa partie supérieure et puisse être démonté. On réalise la mise en appui des crayons situés dans la zone réparée, sur l'embout inférieur. La grille de réparation 10 et la grille inférieure de l'assemblage 4a sont alors parfaitement superposées.

On remet en place l'embout supérieur initial de l'assemblage et on effectue un contrôle visuel grâce à une caméra vidéo de la zone réparée comportant la grille partielle.

Le procédé et le dispositif suivant l'invention permettent donc de réaliser de manière simple et très sûre la réparation d'une grille de l'assemblage combustible, ce qui permet d'éviter des opérations complexes de restauration de l'assemblage combustible et l'utilisation d'une ossature neuve.

L'invention ne se limite pas au mode de réalisation qui a été décrit.

C'est ainsi que les outillages utilisés au cours des différentes phases de l'opération de réparation peuvent avoir une forme différente de celle qui a été décrite.

Ces dispositifs et en particulier l'outillage de pose de la grille partielle pourraient être conçus, de manière à pouvoir effectuer la réparation sur une grille-entretoise quelconque de l'assemblage combustible.

Enfin, le procédé et le dispositif suivant l'invention peuvent être utilisés pour la réparation d'assemblages combustibles pour réacteur nucléaire différents des assemblages pour réacteur à eau sous pression qui ont été décrits plus haut. De manière générale, le procédé et le dispositif peuvent être utilisés pour effectuer la réparation de tout assemblage combustible pour réacteur nucléaire refroidi à l'eau comportant des grilles-entretoises.

## Revendications

1. Procédé de réparation d'une grille-entretoise d'un assemblage combustible pour réacteur nucléaire refroidi à l'eau comportant un faisceau de crayons parallèles (2) et une ossature de maintien des crayon (2) constituée par une pluralité de grilles-entretoises (4) espacées suivant la direction longitudinale du faisceau définissant des cellules (14) disposées suivant un réseau régulier dans lesquelles sont engagés les crayons (2), des tubes-guides (5) fixés aux grilles-entretoises (4) et se substituant à certains crayons (2) du faisceau et deux embouts de fermeture (6, 7) fixés de manière amovible aux extrémités des tubes-guides (5) dont la longueur est supérieure à la longueur des crayons (2), caractérisé par le fait qu'on superpose à la grille-entretoise (4a) dont on effectue la réparation, une grille partielle (10) dont le réseau de cellules (14) correspond à une partie endommagée du réseau de la grille-entretoise (4a), par engagement, suivant la direction longitudinale de l'assemblage (1), des cellules (14) de la grille partielle (10), sur l'une des extrémités des crayons (2) situés dans la zone endommagée de la grille-entretoise (4a) et par poussée sur la grille partielle (10) pour la déplacer jusqu'à sa position superposée à la grille-entretoise (4a), après démontage d'au moins un embout (6, 7) de l'assemblage combustible.

2. Procédé suivant la revendication 1, dans le cas de la réparation d'une grille (4a) ou grille inférieure située le plus près d'un embout (6) de l'assemblage appelé embout inférieur par lequel l'assemblage (1) repose sur un support dans sa position de service, caractérisé par le fait qu'on démonte l'embout (7) situé à l'extrémité supérieure de l'assemblage appelé embout supérieur,
- qu'on réalise la mise en appui des crayons (2) dans la zone de l'assemblage à réparer sur l'embout inférieur (6) de l'assemblage,
- qu'on met en place sur la partie supérieure de l'assemblage, un embout supérieur de substitution (30) comportant une cale (31) de maintien longitudinal des crayons (2) dans la zone à réparer,
- qu'on retourne l'assemblage combustible (1) de manière à placer son embout inférieur (6) en position supérieure,
- qu'on démonte l'embout inférieur (6),
- qu'on met en place la grille partielle de réparation (10), dans une position superposée à la grille (4a) à réparer,
- qu'on remonte l'embout inférieur (6) de l'assemblage combustible (1),
- qu'on retourne l'assemblage combustible de manière à placer l'embout supérieur de substitution en position supérieure,
- qu'on démonte l'embout supérieur de substitution (30),
- qu'on met en appui les crayons (2) de l'assemblage situés dans la zone à réparer sur l'embout inférieur (6),
- et qu'on remet en place l'embout supérieur initial (7) de l'assemblage (1).

3. Procédé suivant l'une quelconque des revendications 1 et 2, caractérisé par le fait que, préalablement à l'engagement de la grille partielle de réparation (10) sur les extrémités des crayons combustibles (2), on engage dans les cellules (14) de la grille partielle (10), des faux crayons (45) constitués par des tronçons cylindriques ayant un diamètre identique au diamètre des crayons combustibles (2), de telle sorte qu'au cours du déplacement par poussée de la grille partielle (10) de réparation, les faux crayons (45) viennent se placer dans le prolongement des crayons (2) et assurent un guidage continu des cellules (14) de la grille partielle de réparation (10).

4. Dispositif de réparation d'une grille-entretoise (4a) d'un assemblage combustible pour réacteur nucléaire refroidi par de l'eau sous pression comportant un faisceau de crayons parallèles (2) et une ossature de maintien des crayons (2) constituée par une pluralité de grilles-entretoises (4) espacées suivant la direction longitudinale du faisceau, définissant des cellules (14) disposées suivant un réseau régulier dans lesquelles sont engagés les crayons (2), des tubes-guides (5) fixés aux grilles-entretoises (4) et se substituant à des crayons (2) du faisceau et deux embouts (6, 7) de fermeture fixés de manière amovible aux extrémités des tubes-guides (5) dont la longueur est supérieure à la longueur des crayons (2), caractérisé par le fait qu'il comporte :
- une plaque support (52),
- des moyens de fixation (53, 55,53′, 55′) de la plaque support (52) sur les parties d'extrémité des tubes-guides (5) de l'assemblage après démontage d'un embout,
- un moyen (57) d'accrochage de la plaque support (52) à un outil de levage et de manutention (60),
- un dispositif de centrage (58) de la plaque support (52) par rapport à l'assemblage combustible,
- deux colonnes de guidage (65) fixées sur la plaque support (52), de manière à être placées dans la direction longitudinale de l'assemblage (1) après la mise en place de la plaque support (52) sur une partie d'extrémité de l'assemblage (1),
- une vis d'entraînement (66) parallèle aux colonnes (65) montée rotative sur la plaque support (52),
- et un élément de support (35b) de la grille partielle (10), appelé bloc presseur, monté glissant sur les colonnes (65), par l'intermédiaire de paliers (42), comportant une ouverture taraudée dans laquelle est engagée la vis (66) dont la mise en rotation dans un sens et dans l'autre permet le déplacement du support (35b) et de la grille partielle (10) dans la direction longitudinale de l'assemblage combustible.

5. Dispositif suivant la revendication 4, caractérisé par le fait que le bloc presseur (35b) est traversé par un réseau d'ouvertures (43) dont le diamètre et les positions correspondent au diamètre et aux positions des crayons combustibles (2) de l'assemblage (1), dans la zone à réparer et que des tronçons cylindriques (45) ou faux crayons ayant un diamètre identique au diamètre des crayons combustibles (2) de l'assemblage sont engagés chacun dans une ouverture (43) traversant le support (35b) et dans une cellule (14) de la grille partielle de réparation (10) située dans le prolongement des ouvertures (43), de manière à assurer le maintien et le guidage de la grille partielle de réparation (10) pendant sa mise en place sur la grille (4a) à réparer.

6. Dispositif suivant la revendication 5, caractérisé par le fait que les faux crayons (45) comportent à l'une de leurs extrémités un logement (45b) destiné à venir coiffer la partie d'extrémité des crayons (2) sur laquelle est engagée la grille partielle (10), pendant le déplacement longitudinal du support (35) et de la grille (10) et une partie (45a) dont le diamètre est supérieur à la partie courante des faux crayons susceptible de venir en appui sur le bloc presseur (35b).

7. Dispositif suivant l'une quelconque des revendications 4 à 6, caractérisé par le fait qu'une butée (67) est disposée à l'extrémité de chacune des colonnes de guidage (65), de manière à limiter le déplacement longitudinal du bloc presseur (35b), lors de la mise en place de la grille partielle (10).

## Patentansprüche

1. Verfahren zum Reparieren eines Abstandsgitters einer Brennelementanordnung eines wassergekühlten Kernreaktors mit einem Bündel paralleler Stäbe (2) und einem Gerüst zum Halten der Stäbe (2), das aus mehreren in Längsrichtung des Bündels voneinander beabstandeten Abstandsgittern (4) besteht, die nach Art eines regelmäßigen Netzes angeordnete Zellen (14) bilden, in die die Stäbe (2) eingreifen, an den Abstandsgittern (4) befestigten und anstelle bestimmter Stäbe (2) des Bündels vorgesehenen Führungsrohren (5) und mit zwei Verschlußansätzen (6, 7), die lösbar an den Enden der Führungsrohre (5) befestigt sind, wobei die Länge der Führungsrohre größer ist als die Länge der Stäbe (2), dadurch gekennzeichnet, daß, nach der Demontage wenigstens eines Ansatzes (6,7) der Brennelementanordnung, ein Teilgitter (10), dessen Netz aus Zellen (14) einem beschädigten Teil des Netzes des Abstandsgitters (4a) entspricht, dem zu reparierenden Abstandsgitter (4a) überlagert wird, indem die Zellen (14) des Teilrosts (10) in Längsrichtung der Anordnung (1) eines der Enden der im beschädigten Bereich des Anstandsgitters (4a) befindlichen Stäbe (2) umgreifen und eine Druckkraft auf das Teilgitter (10) aufgebracht wird, um dieses bis zu seiner Überlagerungsposition zu dem Zwischengitter (4a) zu verschieben.

2. Verfahren nach Anspruch 1, im Falle einer Reparatur eines Gitters (4a) oder eines unteren Gitters, das einem als der untere Ansatz bezeichneten Ansatz der Anordnung (1), mit dem die Anordnung (1) in ihrer Betriebsstellung auf einer Stütze aufliegt, am nächsten ist, dadurch gekennzeichnet, daß der am oberen Ende der Anordnung befindliche Ansatz (7), der als oberer Ansatz bezeichnet wird, demontiert wird,
- daß die in dem zu reparierenden Bereich der Anordnung befindlichen Stäbe (2) in Anlage an den unteren Ansatz (6) der Anordnung gebracht werden,
- daß auf dem oberen Teil der Anordnung ein oberer Ersatzansatz (30) angeordnet wird, der ein Beilagestück (31) zum Stabilisieren der in dem zu reparierenden Bereich befindlichen stäbe (2) in Längsrichtung aufweist,
- daß die Brennelementanordnung (1) derart gedreht wird, daß sich ihr unterer Ansatz (6) oben befindet,
- daß der untere Ansatz (6) demontiert wird,
- daß das Reparatur-Teilgitter (10) an einer oberhalb des zu reparierenden Gitters (4a) gelegenen Position angebracht wird,
- daß der untere Ansatz (6) der Brennelementamordnung (1) wieder angebracht wird,
- daß die Brennelementanordnung derart gedreht wird, daß sich der obere Ersatzansatz oben befindet,
- daß der obere Ersatzansatz (30) demontiert wird,
- daß die in dem zu reparierenden Bereich befindlichen Stäbe (2) der Anordnung in Anlage an den unteren Ansatz (5) gebracht werden,
- und daß der ursprünglich obere Ansatz (7) der Anordnung (1) wieder angebracht wird.

3. Verfahren nach einem der Ansprüche 1 und 2, dadurch gekennzeichnet, daß vor dem Angreifen des Reparatur-Teilgitters (10) an den Enden der Brennstäbe (2) in den Zellen (14) des Teilgitters (10) Scheinstäbe (45), die aus zylindrischen Abschnitten bestehen, deren Durchmesser mit dem Durchmesser der Brennstäbe (2) identisch ist, derart angebracht werden, daß die Scheinstäbe (45), während des Verschiebens des Reparatur-Teilgitters (10) durch die Druckkraft, in die Verlängerung der Stäbe (2) gelangen und die Fortsetzung der Führung durch die Zellen (14) des Reparatur-Teilgitters (10) gewährleisten.

4. Vorrichtung zum Reparieren eines Abstandsgitters einer Brennelementanordnung eines druckwassergekühlten Kernreaktors mit einem Bündel paralleler Stäbe (2) und einem Gerüst zum Halten der Stäbe (2), das aus mehreren in Längsrichtung des Bündels voneinander beabstandeten Abstandsgittern (4) besteht, die nach Art eines regelmäßigen Netzes angeordnete Zellen (14) bilden, in die die Stäbe (2) eingreifen, an den Abstandsgittern (4) befestigten und anstelle bestimmter Stäbe (2) des Bündels vorgesehenen Führungsrohren (5) und mit zwei Verschlußansätzen (6, 7), die lösbar an den Enden der Führungsrohre (5) befestigt sind, wobei die Länge der Führungsrohre größer ist als die Länge der Stäbe (2), dadurch gekennzeichnet, daß sie aufweist:
- eine Trägerplatte (52),
- Einrichtungen (53, 55, 53′, 55′) zum Befestigen der Trägerplatte (52) an den Endbereichen der Führungsrohre (5) der Anordnung nach dem Demontieren eines Ansatzes,
- eine Einrichtung (57) zum Anbringen der Trägerplatte (52) an einem Hebe- und Handhabungswerkzeug (60),
- eine Vorrichtung (58) zum Zentrieren der Trägerplatte auf die Brennelementanordnung,
- zwei Führungssäulen (65), die an der Trägerplatte (52) derart befestigt sind, daß sie nach dem Anordnen der Trägerplatte (52) auf einem Endbereich der Anordnung (1) in Längsrichtung der Anordnung (1) angeordnet sind,
- eine drehbar auf der Trägerplatte (52) montierte Schraube (65) zur Mitnahme parallel zu den Säulen (65),
- und ein als Preßblock bezeichnetes Stützelement (35b) des Teilgitters (10), das über Lager (42) gleitend verschiebbar an den Säulen (65) angebracht ist und eine Gewindeöffnung aufweist, in die die Schraube (66) eingreift, deren Drehung in die eine oder die andere Richtung das Verschieben der Stütze (35b) und des Teilgitters (10) in Längsrichtung der Brennelementanordnung ermöglicht.

5. Vorrichtung nach Anspruch 4, dadurch gekennzeichnet, daß der Preßblock (35b) von einem Netz von Öffnungen (43) durchsetzt ist, deren Durchmesser und Positionen dem Durchmesser und den Positionen der in dem zu reparierenden Bereich befindlichen Brennstäbe (2) der Anordnung (1) entsprechen, und daß die zylindrischen Abschnitte (45) oder Scheinstäbe, deren Durchmesser mit dem Durchmesser der Brennstäbe (29 der Anordnung identisch ist, jeweils in eine die Stütze (35b) durchsetzende Öffnung und eine in der Verlängerung der Öffnung (43) angeordnete Zelle (14) des Reparatur-Teilgitters (10) eingesetzt ist, derart, daß die Stabilisierung und die Führung des Reparatur-Teilgitters (10) während seines Anbringens auf dem zu reparierenden Gitter (4a) gewährleistet ist.

6. Vorrichtung nach Anspruch 5, dadurch gekennzeichnet, daß die Scheinstäbe (45) an einem ihrer Enden eine Aufnahme (45b), die dazu vorgesehen ist, den Endbereich der Stäbe (2), auf den das Teilgitter (10) aufgesetzt ist, während der Verschiebung der Stütze (35b) und des Gitters (10) zu umschließen, und einen Bereich (45a) aufweisen, dessen Durchmesser am freien Teil der Scheinstäbe, der zur Anlage an dem Preßblock (35b) geeignet ist, größer ist.

7. Vorrichtung nach einem der Ansprüche 4 bis 6, dadurch gekennzeichnet, daß am Ende jeder Führungssäule (65) ein Anschlag (67) vorgesehen ist, um die Längsverschiebung des Preßblocks (35b) beim Anbringen des Teilgitters (10) zu begrenzen.

## Claims

1. Method for repairing a spacer grid in a fuel assembly for a water-cooled nuclear reactor having a cluster of parallel rods (2) and a framework for holding the rods (2) consisting of a plurality of spacer grids (4) spaced in the longitudinal direction of the cluster defining cells (14) disposed in a regular network, in which are engaged the rods (2), guide tubes (5) fixed to the spacer grids (4) and being substituted for some rods (2) in the cluster, and two closure connectors (6, 7) fixed removably to the ends of the guide tubes (5), the length of which is greater than the length of the rods (2), characterised in that a partial grid (10), the network of cells (14) of which corresponds to a damaged part of the network of the spacer grid (4a), is placed on top of the spacer grid (4a) which is being repaired, by engaging, in the longitudinal direction of the assembly (1), cells (14) of the partial grid (10) on one of the ends of the rods (2) situated in the damaged area of the spacer grid (4a), and by pushing on the partial grid (10) in order to move it to its position on top of the spacer grid (4a) after at least one connector (6, 7) on the fuel assembly has been removed.

2. Method according to Claim 1, in the case of the repair of a grid (4a) or bottom grid situated nearest to a connector (6) on the assembly, referred to as the bottom connector, by which the assembly (1) rests on a support in its in operating position, characterised in that the connector (7) situated at the top end of the assembly, referred to as the top connector, is removed,
- in that the rods (2) in the area of the assembly to be repaired are supported on the bottom connector (6) of the assembly,
- in that a substitute top connector (30) having a block (31) for the longitudinal holding of the rods (2) in the area to be repaired is positioned on the top part of the assembly,
- in that the fuel assembly (1) is turned over so as to place its bottom connector (6) on top,
- in that the bottom connector (6) is removed,
- in that the partial repair grid (10) is placed in a position on top of the grid (4a) to be repaired,
- in that the bottom connector (6) of the fuel assembly (1) is raised again,
- in that the fuel assembly is turned over so as to place the top substitute connector on top,
- in that the top substitute connector (30) is removed,
- in that the rods (2) of the assembly situated in the area to be repaired are supported on the bottom connector (6),
- and in that the initial top connector (7) of the assembly (1) is put back in place.

3. Method according to either one of Claims 1 or 2, characterised by the fact that, prior to the engaging of the partial repair grid (10) on the ends of the fuel rods (2), dummy rods (45) consisting of cylindrical lengths with a diameter identical to the diameter of the fuel rods (2) are engaged in the cells (14) of the partial grid (10), so that during the movement, by pushing, of the partial repair grid (10), the dummy rods (45) come to be placed in line with the rods (2) and ensure continuous guidance of the cells (14) of the partial repair grid (10).

4. Device for repairing a spacer grid (4a) of a fuel assembly for a pressurised water cooled nuclear reactor having a cluster of parallel rods (2) and a framework for holding the rods (2) consisting of a plurality of spacer grids (4) spaced apart in the longitudinal direction of the cluster, defining cells (14) disposed in a regular network in which are engaged the rods (2), guide tubes (5) fixed to the spacer grids (4) and being substituted for some rods (2) in the cluster, and two closure connectors (6, 7) fixed removably to the ends of the guide tubes (5), the length of which is greater than the length of the rods (2), characterised in that it includes:
- a support plate (52),
- means (53, 55, 53′, 55′) for fixing the support plate (52) to the end parts of the guide tubes (5) of the assembly after removal of a connector,
- a means (57) for fastening the support plate (52) to a lifting and handling tool (60),
- a device for centring (58) the support plate (52) with respect to the fuel assembly,
- two guide columns (65) fixed to the support plate (52), so as to be placed in the longitudinal direction of the assembly (1) after the positioning of the support plate (52) on an end part of the assembly (1),
- a drive screw (66) parallel to the columns (65) mounted so as to rotate on the support plate (52),
- and a support member (35b) for the partial grid (10), referred to as a pressure block, mounted so as to slide on the columns (65), by means of bearings (42), having a threaded opening in which is engaged the screw (66), the rotating of which in either direction enables the support (35b) and the partial grid (10) to be moved in the longitudinal direction of the fuel assembly.

5. Device according to Claim 4, characterised in that the pressure block has passing through it a network of openings (43), the diameter and positions of which correspond to the diameter and positions of the fuel rods (2) of the assembly (1), in the area to be repaired, and in that the cylindrical lengths (45) or dummy rods with a diameter identical to the diameter of the fuel rods (2) of the assembly are each engaged in an opening (43) passing through the support (35b) and in a cell (14) of the partial repair grid (10) situated in line with the openings (43), so as to ensure the holding and guiding of the partial repair grid (10) while it is being positioned in the grid (4a) to be repaired.

6. Device according to Claim 5, characterised in that the dummy rods (45) have at one of their ends a housing (45b) intended to cover the end part of the rods (2) on which the partial grid (10) is engaged, during the longitudinal movement of the support (35) and of the grid (10) and a part (45a) with a diameter greater than the standard part of the dummy rods which is able to bear on the pressure block (35b).

7. Device according to any one of Claims 4 to 6, characterised by the fact that a stop (67) is disposed at the end of each of the guide columns (65) so as to limit the longitudinal movement of the pressure block (35b) when the partial grid is being positioned (10).
